# EUROPÄISCHE PATENTSCHRIFT

(11) **EP 0 635 650 B1**
(45) Veröffentlichungstag und Bekanntmachung des Hinweises auf die Patenterteilung: **29.01.1997**
(21) Anmeldenummer: 94107981.6
(22) Anmeldetag: 24.05.1994
(51) Int. Cl.: F16C 13/04, F27B 7/22

(54) **Kippbewegliche Laufrollenlagerung**
Tiltable-supported bearings for guiding rollers
Support basculant de paliers pour galet de guidage

(30) Priorität: 19.07.1993 DE 4324187
(43) Veröffentlichungstag der Anmeldung: 25.01.1995
(73) Patentinhaber: KRUPP POLYSIUS AG, 59269 Beckum (DE)
(72) Erfinder: Kästingschäfer, Gerhard, Dipl.-Ing., D-59329 Wadersloh (DE); Auf dem Venne, Johannes, Dipl.-Ing., D-59320 Ennigerloh (DE); Giesemann, Reinhard, Dipl.-Ing., D-33428 Harsewinkel (DE); Peterwerth, Bernhard, Dipl.-Ing., D-49196 Bad Laer (DE); Pingel, Herbert, Dipl.-Ing., D-59329 Wadersloh (DE); Gerhardt, Klaus, Dipl.-Ing., D-48167 Münster (DE); Gebbe, Reinhold, Dipl.-Ing., D-48336 Sassenberg (DE)
(74) Vertreter: Tetzner, Volkmar, Dr.-Ing. Dr. jur.

(56) Entgegenhaltungen:
- EP-A- 0 019 136
- EP-A- 0 567 777
- DE-A- 2 801 588
- DE-C- 366 583
- FR-A- 395 838
- FR-A- 1 578 176
- GB-A- 883 167

## Beschreibung

Die Erfindung betrifft eine kippbewegliche Laufrollenlagerung zur Abstützung eines umlaufend antreibbaren Drehrohres, entsprechend dem Oberbegriff des Anspruches 1.

Bei Drehrohren der vorausgesetzten Art handelt es sich um solche mit relativ großem Durchmesser und mit relativ großer Länge, beispielsweise für Drehrohröfen, Drehrohrkühler, Mischtrommeln oder dgl. Diese relativ großen Drehrohre werden mit nicht zu vermeidenden Montageungenauigkeiten aufgebaut, und sie weisen mehr oder weniger starke Verkrümmungen ihrer an sich zylindrischen Mäntel auf, was zu einer Taumelbewegung ihrer Umfangslaufflächen führt, die im allgemeinen durch auf dem Drehrohrmantel angebrachte Laufringe gebildet werden. Eine solche Taumelbewegung bringt ein schlechtes Tragverhalten zwischen dieser Umfangslauffläche (Laufring) und den sie abstützenden Laufrollen der Laufrollenlagerung mit sich. Die sich daraus ergebenden örtlichen Lastüberhöhungen an den Kontaktflächen zwischen den Laufrollen und den Umfanglaufflächen des Drehrohres führen zu Beschädigungen der Laufflächen.

Zur Vermeidung solcher Beschädigungen sind bereits unterschiedliche Vorschläge gemacht worden (z. B. DE-C-27 36 111, DE-A-28 01 588 und DE-C-35 40 590), bei denen eine frei drehbar gelagerte Laufrolle über eine Rollenachse von einer Tragkonstruktion getragen wird, die um einen etwa in Höhe der Laufrollenachse oder darunterliegenden Drehpunkt kippbeweglich gegenüber einer ortsfesten Stützfläche bzw. Fundamentplatte abgestützt ist. Durch diese bekannten kippbeweglichen Laufrollenlagerungen rungen können durch Montageungenauigkeiten und verkrümmte Drehrohrmäntel hervorgerufene Schrägstellungen der Umfangslaufflächen (z. B. Laufringoberflächen) durch eine Reaktion der entsprechenden Laufrolle bzw. Laufrollen zwar ausgeglichen werden. Probleme bereitet aber die Schiefstellung der jeweiligen Umfangslauffläche des Drehrohres zur gedachten Drehrohr-Längsmittelachse, wodurch während jedes Umlaufes zusätzliche Längsbewegungen in Richtung dieser Längsmittelachse auftreten. Diese Längsbewegungen erzeugen nämlich im Bereich der Kontaktflächen zwischen Laufrollen-Außenumfangsfläche und Drehrohr-Umfangslauffläche Axialkräfte, deren Größe vor allem durch die vertikale Auflagerkraft und den Reibfaktor bestimmt wird. Durch die Auswirkungen dieser Axialkräfte kann es an den Laufrollen-Außenumfangsstellen und an den Drehrohr-Umfangslaufflächen zu erheblichen örtlichen Lastüberhöhungen kommen, die zu Beschädigungen dieser Umfangs- bzw. Laufflächen führen können.

Der Erfindung liegt die Aufgabe zugrunde, eine kippbewegliche Laufrollenlagerung der im Oberbegriff des Anspruches 1 vorausgesetzten Art zu schaffen, durch die bei vergleichsweise geringem Herstellungs- und Kostenaufwand aus Montageungenauigkeiten sowie einem verkrümmten Drehrohrmantel resultierende Schrägstellungen der Drehrohr-Umfangslaufflächen (bzw. Laufringe) ausgeglichen und durch Schiefstellungen dieser Drehrohr-Umfangslaufflächen auftretende zusätzliche Längsbewegungen des Drehrohres zumindest auf ein vertretbares Minimum herabgesetzt werden.

Diese Aufgabe wird erfindungsgemäß durch die Merkmale des Anspruches 1 gelöst.

Vorteilhafte Ausgestaltungen der Erfindung sind Gegenstand der Unteransprüche.

Der Erfindung zugrundeliegende Untersuchungen haben ergeben, daß dem Abstand zwischen der Kontaktlinie von Laufrollen-Außenumfangsfläche und Drehrohr-Umfangslauffläche einerseits und dem Drehpunkt der kippbeweglichen Laufrollenlagerung (Laufrolle und Tragkonstruktion) eine besondere Bedeutung zukommt. Der erwähnte Abstand bestimmt einen Hebelarm um den genannten Drehpunkt. Je größer dieser Hebelarm ist, desto größer wird ein um den genannten Drehpunkt wirkendes Drehmoment, und je größer dieses Drehmoment ist, desto größer wird auch die zusätzlich an der genannten Kontaktlinie auftretende Belastung und somit die Belastung von Laufrolle und Drehrohr-Umfangslauffläche bzw. Laufring.

Betrachtet man in diesem Zusammenhang nochmals die eingangs erläuterten bekannten Ausführungen, bei denen der Drehpunkt der kippbeweglichen Laufrollenlagerung etwa in Höhe der Laufrollen-Drehachse oder deutlich darunter liegt, so ergeben sich dort relativ große Hebelarme zwischen der genannten Kontaktlinie und dem Drehpunkt, was zu relativ großen Drehmomenten und damit zu einer erheblichen Gefahr von örtlichen Lastüberhöhungen und den hiermit verbundenen Beschädigungen der miteinander in Berührung stehenden Oberflächen führt.

Um die zuvor erläuterten Nachteile bekannter Ausführungen zu umgehen, hat man in der nicht vorveröffentlichten EP-A-567 777 zwar bereits eine kippbewegliche Laufrollenlagerung vorgeschlagen, durch deren konstruktiven Aufbau der oben erwähnte Drehpunkt der kippbeweglichen Laufrollenlagerung in den Bereich des Schnittpunktes gelegt wird, der durch die Kontaktlinie zwischen Laufrollen-Außenumfangsfläche und Drehrohr-Umfangslauffläche einerseits und die vertikalen Laufrollen-Mittelachse andererseits gebildet wird. Um dies zu erreichen werden bei der Ausführung gemäß dieser EP-A-567 777 jedoch nicht einfache Tragelemente bzw. Stützlager zwischen der die Drehlager tragenden Tragkonstruktion und der ortsfesten Fundamentplatte angeordnet, sondern es wird dazu eine kippbewegliche Abstützung in Form eines viergliedrigen Gelenkgetriebes mit der Tragkonstruktion und der ortsfesten Stützfläche sowie mit zwei gelenkig dazwischen angebrachten, kurbelartigen Schwingen ausgebildet, die an ihren oberen und unteren freien Enden Schwenkgelenke aufweisen, über die sie jeweils einerseits mit der Laufrollen-Tragkonstruktion und andererseits mit der ortsfesten Fundamentplatte gelenkig verbunden sind. Diese kurbelartigen Schwingen des viergliedrigen Gelenkgetriebes sind dabei mit ihren Mittellinien so ausgerichtet, daß der Drehpunkt dieses Gelenkgetriebes im Bereich des Schnittpunktes der Kontaktlinie zwischen Laufrollen-Außenumfangsfläche und Drehrohr-Umfangslauffläche mit der vertikalen Laufrollen-Mittelachse liegt.

Gegenüber diesem älteren, nicht vorveröffentlichten Vorschlag sind bei der erfindungsgemäßen Laufrollenlagerung in ihrer Querrichtung schubweich ausgebildete, elastische Stützlager als Tragelemente vorgesehen, und diese relativ einfachen Stützlager sind jeweils im Bereich unterhalb der beiden Drehlager derart gegeneinander geneigt zwischen der Tragkonstruktion und der Fundamentplatte (Solplatte) angeordnet, daß senkrecht durch sie hindurchgehende Mittelachsen sich im Bereich des Schnittpunktes schneiden, der durch die vertikale Laufrollen-Mittelachse und die Kontaktlinie zwischen der Laufrollen-Außenumfangsfläche und der Drehrohr-Umfangslauffläche bestimmt ist. Somit bildet auch bei der erfindungsgemäßen Ausführung der zuvor definierte Schnittpunkt einen Kraftangriffspunkt, in dem alle wesentlichen auftretenden Kräfte, nämlich die vertikale Gewichtsbelastung seitens des Drehrohres und die aus einem axialen Drehrohrschub und der Reibung resultierenden horizontalen Kraft, angreifen. Erfindungsgemäß ist dazu jedoch kein viergliedriges Gelenkgetriebe aus der Tragkonstruktion, der ortsfesten Fundamentplatte sowie zwei gelenkig dazwischen angebrachten, kurbelartigen Schwingen mit zugehörigen Schwenkgelenken erforderlich, sondern es genügen relativ einfache elastische Stützlager, die nur eine relativ niedrige Bauhöhe bedingen, wodurch diese insgesamt vorteilhafte erfindungsgemäße Ausbildung mit einem vergleichsweise besonders niedrigen Herstellungs- und Kostenaufwand erreicht werden kann.

Durch diese erfindungsgemäße Abstützung mit Hilfe der in ihrer Querrichtung schubweichen, elastischen Stützlager wird daher der oben erwähnte Drehpunkt dieser Laufrollenlagerung ganz in die Nähe des genannten Schnittpunktes oder direkt in diesen Schnittpunkt gelegt, so daß hier gegenüber den eingangs erläuterten bekannten Ausführungen der Hebelarm zwischen dem Drehpunkt und dem Schnittpunkt (Kraftangriffspunkt) ganz klein oder gar Null wird, so daß dementsprechend auch ein sich daraus bei Schiefstellungen der Drehrohr Umfangslauffläche bzw. des Drehrohr-Laufringes ergebendes Drehmoment auf ein Minimum herabgesetzt wird bzw. überhaupt nicht auftritt, was wiederum örtliche Lastüberhöhungen vernachlässigbar klein werden oder überhaupt nicht auftreten läßt.

Die Erfindung sei nachfolgend anhand der Zeichnung näher erläutert. In dieser Zeichnung zeigen
- Fig. 1: eine z. T. geschnittene Längsansicht einer erfindungsgemäßen Laufrollenlagerung;
- Fig.2: eine vereinfachte Queransicht für ein erstes Ausführungsbeispiel einer Zusammenordnung zweier Laufrollenlagerungen zu einer Laufrollenstation bei Anordnung unter dem Drehrohr beispielsweise eines Drehrohrofens;
- Fig.3: eine ähnliche Queransicht wie in Fig.2, jedoch zur Erläuterung einer anderen Ausführungsmöglichkeit für die Verbindung zwischen den zwei zu einer Laufrollenstation zusammengefaßten Laufrollenlagerungen.

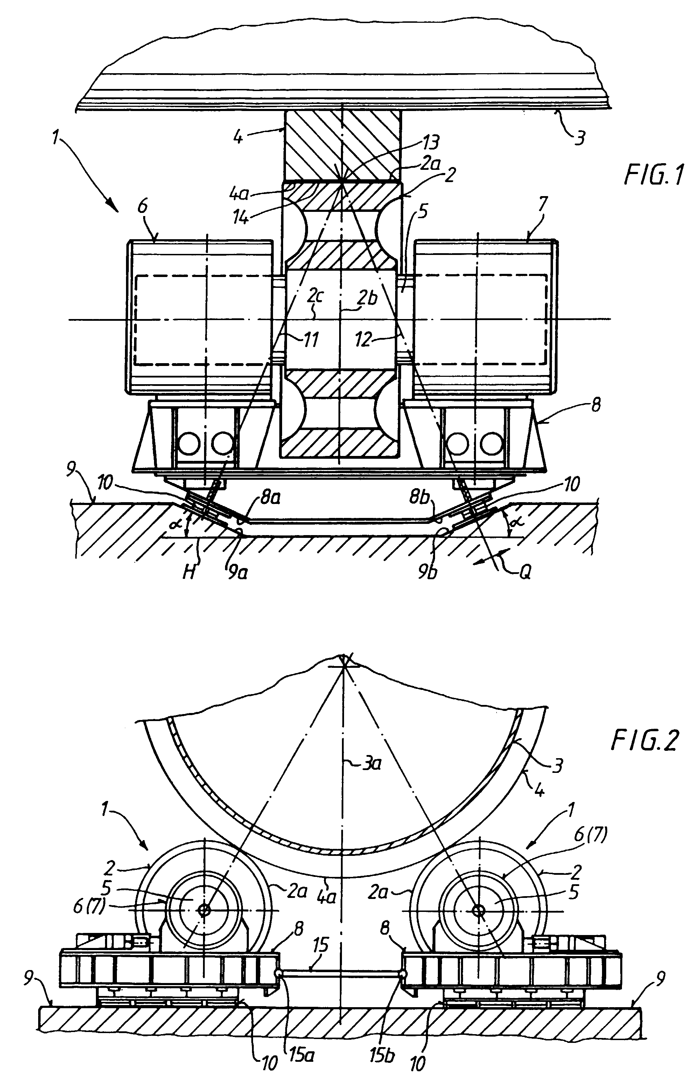

Die in Fig.1 veranschaulichte erfindungsgemäße kippbewegliche Laufrollenlagerung 1 enthält eine frei drehbar gelagerte Laufrolle 2 und bildet eine Art selbsteinstellende Rollenstütze für einen zugeordneten bzw. abzustützenden Längsabschnitt eines nur angedeuteten Drehrohres 3, das beispielsweise Teil eines Drehrohrofens oder einer ähnlich groß dimensionierten anderen Einrichtung sein kann. Auf der Außenumfangsfläche (Lagerfläche) 2a dieser Laufrolle 2 stützt sich das Drehrohr 3 mit einer entsprechenden Umfangslauffläche abwälzend ab, die direkt auf dem zylindrischen Mantel dieses Drehrohres 3 ausgebildet sein kann, vorzugsweise jedoch - wie an sich bekannt - durch einen auf dem Drehrohrmantel angebrachten Laufring 4 bzw. dessen Umfangslauffläche 4a gebildet wird. Das Drehrohr 3 kann in üblicher Weise umlaufend angetrieben werden.

Die Laufrolle 2 ist auf einer Rollenachse 5 angebracht und über die beiden Enden dieser Rollenachse 5 in zwei Drehlagern 6, 7 frei drehbar gelagert bzw. abgestützt, die in herkömmlicher Weise durch Wälzlager oder Gleitlager gebildet sein können.

Über ihre Rollenachse 5 und ihre Drehlager 6, 7 wird die Laufrolle 2 von einer Tragkonstruktion 8 getragen, die durch eine profilrahmenartige Unterstützungskonstruktion gebildet sein kann. Diese Tragkonstruktion 8 ist ihrerseits über Tragelemente auf einer ortsfesten Solplatte bzw. Fundamentplatte 9 kippbeweglich abgestützt, die als gesonderte Fundamentplatte ausgebildet und aufgestellt oder auch in geeigneter Weise in ein Aufstellfundament eingearbeitet sein kann.

Die zuvor erwähnten Tragelemente sind als in ihrer Querrichtung (vgl. z. B. Doppelpfeil Q in Fig.1) schubweiche, elastische Stützlager 10 ausgebildet, wobei jedes dieser Stützlager 10 im Bereich unterhalb eines der beiden Drehlager 6 bzw. 7 angeordnet ist. Von besonderer Bedeutung ist hierbei, daß diese beiden Stützlager 10 in der in Fig.1 veranschaulichten Weise derart gegeneinander geneigt zwischen der Tragkonstruktion 8 und der Fundamentplatte 9 angeordnet und ausgerichtet sind, daß senkrecht durch sie hindurchgehende Mittelachsen 11, 12 sich im Bereich des Schnittpunktes 13 schneiden, in dem sich die vertikale Laufrollen-Mittelachse 2b und die Kontaktlinie 14 schneiden, an der sich die Außenumfangsfläche 2a der Laufrolle 2 und die Umfangslauffläche 4a des Laufringes 4 berühren. Die Stützlager 10 sind dabei in der Grundstellung der Laufrollenlagerung 1 unter gleichen Winkel α zur horizontalen H gegeneinander geneigt.

Um die zuvor beschriebene Neigung der beiden Stützlager 10 gegeneinander zu erreichen, weisen die Tragkonstruktion 8 und die Fundamentplatte 9 in ihren Bereichen unterhalb der beiden Drehlager 6, 7 jeweils zwei sich einander gegenüberliegende, parallel zueinander verlaufende Widerlagerflächen 8a, 9a bzw. 8b, 9b auf, zwischen denen je ein zugehöriges Stützlager 10 angeordnet ist und deren gedachte senkrecht zu ihnen verlaufenden Mittellinien mit den sich schneidenden Mittelachsen 11, 12 der Stützlager 10 zusammenfallen, wie es in Fig.1 zu erkennen ist.

Die Stützlager 10 können wenigstens z. T. in Form von elastischen Stützlagerpaketen ausgeführt sein. Eine besonders vorteilhafte und bevorzugte Ausbildung dieser Stützlager 10 ergibt sich dadurch, daß sie als Elastomer-Stützlager ausgebildet sind und somit einerseits in der gewünschten Querrichtung (Doppelpfeil Q) schubweich und elastisch und zusätzlich noch in Richtung ihrer Mittelachsen 11, 12 elastisch sind.

Der durch die gewählte Neigung (Winkel α) und somit durch ihre sich schneidenden Mittelachsen 11, 12 gebildete Schnittpunkt (der ja in unmittelbarer Nähe des Schnittpunktes 13 zwischen der vertikalen Laufrollen-Mittelachse 2b und der Kontaktlinie 14 von Laufrollen-Außenumfangsfläche 2a und Drehrohr-Umfangslauffläche 4a oder direkt darin liegt) bildet gleichzeitig einen sogenannten Drehpol, der durch eine Schubverformung der schubweichen Stützlager 10 beim Auftreten eines Kantentragens der aneinander abwälzenden Elemente (Laufrolle 2 und Drehrohr 3) und/oder der gegenüber Horizontalkräften nachgiebigen Tragkonstruktion 8 gebildet wird.

Durch diese in ihrer Funktion äußerst sichere und zuverlässige kippbewegliche Abstützung der Tragkonstruktion 8 mitsamt der von ihr getragenen Laufrolle 2 und Zubehörteilen werden zum einen Schrägstellungen des Laufringes 4 bzw. seiner Umfangsfläche 4a durch die Reaktion der Laufrolle 2 wirksam kompensiert, und zum andern werden auch durch Schiefstellungen des Laufringes 4 gegenüber der Drehrohr-Längsachse bei der Drehbewegung auftretende zusätzliche Längsbewegungen (Axialbewegungen) dieses Drehrohres 3 in vorteilhafter Weise kompensiert, indem zwischen dem Drehpunkt der Laufrollenlagerung 1 und dem im Schnittpunkt 13 zwischen Kontaktlinie 14 und vertikaler Laufrollen-Mittelachse 2b auftretenden Kraftangriffspunkt nur ein äußerst kleiner oder überhaupt kein Hebelarm vorhanden ist, so daß dementsprechend auch vernachlässigbar kleine oder überhaupt keine Drehmomente zwischen diesen Bereichen auftreten können, die aus Axialkräften bei Längsbewegungen bzw. Schiefstellungen des Drehrohres 3 mit dem Laufring 4 auftreten können.

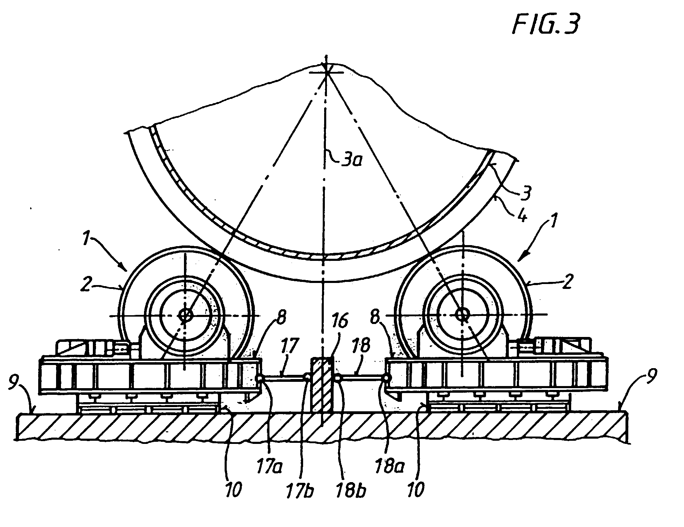

Fig.2 zeigt ein erstes Ausführungsbeispiel für die Zusammenordnung zweier gemäß dieser Erfindung gleichartig konstruierter Laufrollenlagerungen 1 zu einer Laufrollenstation zur Abstützung eines entsprechenden Längsabschnittes des Drehrohres 3 über den entsprechenden Laufring 4.

Die beiden kippbeweglichen Laufrollenlagerungen 1 sind hierbei symmetrisch zu beiden Seiten der vertikalen Längsmittelebene 3a des Drehrohres 3 angeordnet und wirken mit derselben Umfangslauffläche bzw. demselben Laufring 4 zusammen. Jede dieser beiden Laufrollenstationen 1 ist entsprechend der zuvor anhand Fig.1 gegebenen Erläuterung konstruiert. Dementsprechend ist auch jede Laufrolle 2 über ihre Rollenachse 5, die Drehlager 6, 7 und die zugehörige Tragkonstruktion 8 mittels der gegeneinander geneigt angeordneten, schubweichen Stützlager 10 kippbeweglich auf einer zugehörigen Fundamentplatte 9 abgestützt.

Wichtig bei dieser paarweisen Zusammenordnung zweier Laufrollenlagerungen 1 ist jedoch, daß die beiden Tragkonstruktionen 8 durch wenigstens ein Abstandselement 15 miteinander verbunden sind, durch das ein gleichbleibender Abstand zwischen diesen beiden Tragkonstruktionen 8 und somit insbesondere zwischen den beiden von ihnen getragenen Laufrollen 2 aufrechterhalten wird und daß auftretende Spreizkräfte durch die vom Drehrohr 3 ausgehende senkrechte Gewichtsbelastung der beiden Laufrollen 2 aufgenommen werden. Damit hier die unabhängige Kippbeweglichkeit jeder Laufrollenlagerung 1 gewahrt bleibt, weist das Abstandselement 15 an seinen Verbindungsstellen mit den Tragkonstruktionen 8 zweckmäßig Verbindungsgelenke 15a, 15b auf.

Bei der Verwendung eines durchgehenden (einteiligen) Abstandselements 15 entsprechend dem vorhergehenden Ausführungsbeispiel (Fig.2) ist es bei ungünstigen Aufstellungs- bzw. Betriebsverhältnissen einer Laufrollenstation im Zusammenwirken mit dem abzustützenden Drehrohr nicht völlig auszuschließen, daß sich die beiden Tragkonstruktion 8, die je eine Laufrolle 2 lagernd abstützen, ungünstig beeinflussen könnten. Um dies vollkommen auszuschalten, dabei aber die Vorteile eines im wesentlichen gleichbleibenden Abstandes voneinander beibehalten zu können, wird die in Fig.3 veranschaulichte weitere Ausführungsmöglichkeit für die Zusammenordnung zweier Laufrollenlagerungen 1 zu einer Laufrollenstation vorgesehen. Ein wesentlicher Unterschied zwischen dieser weiteren Ausführungsmöglichkeit gemäß Fig.3 und dem zuvor anhand Fig.2 beschriebenen Ausführungsbeispiel ist darin zu sehen, daß im Bereich zwischen den beiden Tragkonstruktionen 8, die jeweils gleichartig ausgeführt sein können wie im Zusammenhang mit Fig.1 beschrieben worden ist, einerseits ein ortsfestes bzw. stationäres Stützelement 16 angeordnet ist und andererseits diese beiden Tragkonstruktionen 8 durch zwei Abstandselemente 17 und 18 derart miteinander verbunden sind, daß jedes Abstandselement 17, 18 durch sein eines Ende über ein Verbindungsgelenk 17a bzw. 18a gelenkig mit einer der beiden Tragkonstruktionen 8 und durch sein anderes, entgegengesetztes Ende über ein Verbindungsgelenk 17b bzw. 18b gelenkig mit dem ortsfesten Stützelement 16 verbunden ist. Aus Gründen der gleichartigen Auslenkbarkeit sowie einer gleichartigen Konstruktion wird es im allgemeinen zweckmäßig sein, die beiden Abstandselemente 17 und 18 - in Querrichtung zum zugehörigen Drehrohr 3 betrachtet - im wesentlichen gleich lang auszubilden und dementsprechend das ortsfeste Stützelement 16 etwa auf der vertikalen Längsmittelebene 3a des abzustützenden Drehrohres 3 ortsfest, vorzugsweise auf der oder einer zugehörigen Fundamentplatte 9 anzuordnen. Die beiden zu einer Laufrollenstation gehörenden Laufrollenlagerungen 1 sind auf diese Weise nicht direkt, sondern mittelbar über das Stützelement 16 zur Aufrechterhaltung eines gleichen Abstandes miteinander verbunden; im Vergleich zu der zuvor beschriebenen Ausführungsform gemäß Fig.2 ergibt sich bei dieser weiteren Ausführungsmöglichkeit gemäß Fig.3 gewissermaßen eine Unterteilung des Abstandselements 15 in zwei gleich lange Teilabstandselemente. Ansonsten können jedoch alle übrigen Teile jeder zu dieser Laufrollenstation gemäß Fig.3 gehörenden Laufrollenlagerung in der weiter oben insbesondere anhand Fig.1 beschriebenen Ausführung konstruiert sein, wobei insbesondere die in ihrer Querrichtung schubweichen, elastischen Stützlager 10 in der anhand Fig.1 beschriebenen Weise zwischen der Tragkonstruktion 8 und der zugehörigen Fundamentplatte 9 angeordnet sind.

Zur allgemeinen Ausbildung der Stützlager 10 sei noch erwähnt, daß jedes Stützlager 10 - wie besonders in Fig.2 zu erkennen ist - in Form wenigstens eines relativ flachen Streifens oder in Form von in einer Reihe zusammengefaßten schubweichen Stützlagerelementen ausgebildet ist, wobei jeder Streifen bzw. jede Stützlagerelement-Reihe rechtwinklig (quer) zur Rollenlängsachse 2c ausgerichtet ist. Die Gesamtlänge eines solchen Stützlagerstreifens bzw. einer solchen Stützlagerelementreihe richtet sich zweckmäßig nach der jeweiligen Konstruktion und Anordnung der ganzen Laufrollenlagerung 1 bzw. der daraus gebildeten Laufrollenstation.

## Patentansprüche

1. Kippbewegliche Laufrollenlagerung zur Abstützung eines umlaufend antreibbaren Drehrohres (3), enthaltend
a) eine mit ihrer Rollenachse (5) in zwei Drehlagern (6, 7) frei drehbar abgestützte Laufrolle (2), auf deren Außenumfangsfläche (2a) eine Umfangslauffläche (4a) des Drehrohres (3) gelagert ist,
b) eine Tragkonstruktion (8), auf der die Drehlager (6, 7) angeordnet sind und die über Tragelemente (10) auf einer ortsfesten Fundamentplatte (9) kippbeweglich abgestützt ist,
dadurch gekennzeichnet, daß
c) die Tragelemente -unter Vermeidung eines Gelenkgetriebes mit kurbelartigen Schwingen- als in ihrer Querrichtung (Q) schubweiche, elastische Stützlager (10) ausgebildet und jeweils im Bereich unterhalb der beiden Drehlager (6, 7) derart gegeneinander geneigt zwischen der Tragkonstruktion (8) und der Fundamentplatte (9) angeordnet sind, daß senkrecht durch sie hindurchgehende Mittelachsen (11, 12) sich im Bereich des Schnittpunktes (13) zwischen der vertikalen Laufrollen-Mittelachse (2b) und der Kontaktlinie (14) von Laufrollen-Außenumfangsfläche (2a) und Drehrohr-Umfangslauffläche (4a) schneiden.

2. Laufrollenlagerung nach Anspruch 1, dadurch gekennzeichnet, daß die Stützlager (10) wenigstens z. T. in Form von elastischen Stützlagerpaketen ausgeführt sind.

3. Laufrollenlagerung nach Anspruch 1, dadurch gekennzeichnet, daß die Stützlager (10) als Elastomer-Stützlager ausgeführt sind.

4. Laufrollenlagerung nach Anspruch 1, dadurch gekennzeichnet, daß jedes Stützlager (10) in Form wenigstens eines relativ flachen Streifens oder in Form von in einer Reihe zusammengeordneten Stütz lagerelementen ausgebildet ist, wobei jeder Streifen bzw. jede Stützlagerelementreihe rechtwinklig zur Rollenlängsachse (2c) ausgerichtet ist (vgl. Fig. 2).

5. Laufrollenlagerung nach Anspruch 1, dadurch gekennzeichnet, daß die Stützlager (10) in der Grundstellung unter gleichen Winkeln (α) zur Horizontalen (H) gegeneinander geneigt sind.

6. Laufrollenlagerung nach Anspruch 5, dadurch gekennzeichnet, daß die Tragkonstruktion (8) und die Fundamentplatte (9) in den Bereichen unterhalb der beiden Drehlager (6, 7) jeweils zwei sich einander gegenüberliegende, parallel zueinander verlaufende Widerlagerflächen (8a, 9a bzw. 8b, 9b) aufweisen, zwischen denen je ein zugehöriges Stützlager (10) angeordnet ist und deren gedachte senkrecht zu ihnen verlaufenden Mittellinien mit den sich schneidenden Mittelachsen (11, 12) der Stützlager (10) zusammenfallen.

7. Laufrollenlagerung nach Anspruch 6, dadurch gekennzeichnet, daß zumindest die Tragkonstruktion (8) profilrahmenartig ausgebildet ist.

8. Laufrollenlagerung nach Anspruch 1, wobei zwei Laufrollen (2) mit ihren Tragkonstruktionen (8) zu einer Laufrollenstation zusammengeordnet sind, indem sie symmetrisch zu beiden Seiten der vertikalen Längsmittelebene (3a) des abzustützenden Drehrohres (3) liegen und mit derselben Umfangslauffläche (4, 4a) dieses Drehrohres zusammenwirken, dadurch gekennzeichnet, daß die beiden Tragkonstruktionen (8) durch wenigstens ein Abstandselement (15, 17, 18) zur Aufrechterhaltung eines gleichen Abstandes miteinander verbunden sind.

9. Laufrollenlagerung nach Anspruch 8, dadurch gekennzeichnet, daß das Abstandselement (15) an seinen Verbindungsstellen mit den Tragkonstruktionen (8) Verbindungsgelenke (15a, 15b) aufweist.

10. Laufrollenlagerung nach Anspruch 8, dadurch gekennzeichnet, daß im Bereich zwischen den beiden Tragkonstruktionen (8) einerseits ein ortsfestes Stützelement (16) - vorzugsweise etwa auf der vertikalen Längsmittelebene (3a) des abzustützenden Drehrohres (3) - angeordnet ist und andererseits diese beiden Tragkonstruktionen (8) durch zwei Abstandselemente (17, 18) derart miteinander verbunden sind, daß jedes Abstandselement durch sein eines Ende gelenkig mit einer der beiden Tragkonstruktionen (8) und durch sein anderes, entgegengesetztes Ende gelenkig mit dem ortsfesten Stützelement (16) verbunden ist.

## Claims

1. Tiltable supporting roller bearing for supporting a rotary drum (3) which is driven in rotation, comprising
a) a supporting roller (2) which is supported with its roller axle (5) so as to be freely rotatable in two pivot bearings (6, 7) and has a circumferential running surface (4a) of the rotary drum (3) mounted on its outer circumferential surface (2a),
b) a bearing structure (8) on which the pivot bearings (6, 7) are arranged and which is tiltably supported by way of bearing elements (10) on a stationary foundation plate (9),
characterised in that
c) the bearing elements are constructed - avoiding a linkage with crank-like rockers - as resilient support bearings (10) which are easily shifted in their cross direction (Q), and in each case in the region below the two pivot bearings (6, 7) these support bearings are inclined towards one another between the bearing structure (8) and the foundation plate (9) in such a way that central axes (11, 12) passing vertically through them intersect in the region of the point of intersection (13) between the vertical central axis (2b) of the supporting roller and the line of contact (14) of the outer circumferential surface (2a) of the supporting roller and the circumferential running surface (4a) of the rotary kiln.

2. Supporting roller bearing as claimed in Claim 1, characterised in that the support bearings (10) are at least partially constructed in the form of resilient support bearing sets.

3. Supporting roller bearing as claimed in Claim 1, characterised in that the support bearings (10) are constructed as elastomeric support bearings.

4. Supporting roller bearing as claimed in Claim 1, characterised in that each support bearing (10) is constructed in the form of at least one relatively flat strip or in the form of support bearing elements assembled in a row, wherein each strip or each row of support bearing elements is aligned at right angles to the longitudinal roller axis (2c) (cf. Figure 2).

5. Supporting roller bearing as claimed in Claim 1, characterised in that in the basic position the support bearings (10) are inclined towards one another at the same angle (α) with respect to the horizontal (H).

6. Supporting roller bearing as claimed in Claim 5, characterised in that the bearing structure (8) and the foundation plate (9) each have in the regions below the two pivot bearings (6, 7) two opposing abutment surfaces (8a, 9a and 8b, 9b respectively) which run parallel to one another and between which an associated support bearing (10) is arranged in each case, the imaginary central lines of these abutment surfaces running perpendicular thereto coinciding with the intersecting central axes (11, 12) of the support bearings (10).

7. Supporting roller bearing as claimed in Claim 6, characterised in that at least the bearing structure (8) is constructed like a profiled frame.

8. Supporting roller bearing as claimed in Claim 1, in which two supporting rollers (2) with their bearing structure (8) are combined to form a supporting roller set, are arranged symmetrically on both sides of the vertical longitudinal central plane (3a) of the rotary drum (3) to be supported and co-operate with the same circumferential running surface (4, 4a) of this rotary drum, characterised in that the two bearing structures (8) are connected to one another by at least one spacer element (15, 17, 18) in order to maintain a constant spacing.

9. Supporting roller bearing as claimed in Claim 8, characterised in that the spacer element (15) advantageously has connecting joints (15a, 15b) at its points of connection to the bearing structures (8).

10. Supporting roller bearing as claimed in Claim 8, characterised in that in the region between the two bearing structures (8) on the one hand a stationary support element (16) is arranged - preferably approximately on the vertical longitudinal central plane (3a) of the rotary drum (3) to be supported - and on the other hand these two bearing structures (8) are connected to one another by two spacer elements (17, 18) in such a way that each spacer element is flexibly connected at one end to one of the two bearing structures (8) and at its other, opposite end to the stationary support element (16).

## Revendications

1. Support de galet de roulement capable de mouvements d'oscillation pour le support d'un tube rotatif (3) pouvant être entraîné en rotation, comprenant :
a) un galet de roulement (2) prenant appui librement rotatif par son axe (5) dans deux paliers (6, 7) et sur la surface circonférentielle extérieure (2a) duquel prend appui une surface circonférentielle de roulement (4a) du tube rotatif (3),
b) une charpente (8) sur laquelle les paliers (6, 7) sont disposés et qui prend appui de manière à pouvoir exécuter des mouvements d'oscillation sur une plaque fixe d'assise (9) par l'intermédiaire d'éléments de support (10),
caractérisé en ce que :
c) les éléments de support sont conformés en semelles élastiques d'appui (10) flexibles au cisaillement dans leur direction transversale (Q) - en évitant un mécanisme articulé comprenant des bielles oscillantes de type en manivelle - et chacune d'elles est disposée dans la région située au-dessous des deux paliers (6, 7) entre la charpente (8) et la plaque d'assise (9) en étant inclinée l'une vers l'autre de manière que des axes de symétrie (11, 12) passant perpendiculairement par elles se coupent à proximité du point d'intersection (13) de l'axe vertical de symétrie (2b) du galet de roulement et de la ligne de contact (14) entre la surface circonférentielle extérieure (2a) du galet de roulement et la surface circonférentielle de roulement (4a) du tube rotatif.

2. Support de galet de roulement selon la revendication 1, caractérisé en ce que les semelles de support (10) sont réalisées au moins en partie en forme de paquets élastiques de semelles de support.

3. Support de galet de roulement selon la revendication 1, caractérisé en ce que les semelles d'appui (10) sont réalisées sous la forme de semelles d'appui en élastomère.

4. Support de galet de roulement selon la revendication 1, caractérisé en ce que chaque semelle d'appui est réalisée sous la forme d'au moins une bande relativement plate ou sous la forme d'une rangée d'éléments assemblés de semelle d'appui, chaque bande ou chaque rangée d'éléments de semelle d'appui étant orientée perpendiculairement à l'axe longitudinal du galet (2c) (voir figure 2).

5. Support de galet de roulement selon la revendication 1, caractérisé en ce que les semelles d'appui (10) sont inclinées l'une vers l'autre à la position de base suivant les mêmes angles (α) sur l'horizontale (H).

6. Support de galet de roulement selon la revendication 5, caractérisé en ce que la charpente (8) et la plaque d'assise (9) comportent dans chacune des régions situées sous les deux paliers (6, 7) deux surfaces d'appui parallèles et opposées (8a, 9a ainsi que 8b, 9b) entre lesquelles est disposée une semelle correspondante d'appui (10) et dont les lignes de symétrie imaginaires passant perpendiculairement par elles coïncident avec les axes de symétrie (11, 12) des semelles d'appui (10) qui se coupent.

7. Support de galet de roulement selon la revendication 6, caractérisé en ce qu'au moins la charpente (8) est conformée à la manière d'un châssis en profilés.

8. Support de galet de roulement selon la revendication 1, deux galets de roulement (2) ainsi que leurs charpentes (8) étant assemblés en un poste à galets de roulement en étant placés symétriquement sur les deux côtés du plan vertical longitudinal de symétrie (3a) du tube rotatif à supporter (3) et en coopérant avec la même surface circonférentielle de roulement (4, 4a) de ce tube rotatif, caractérisé en ce que les deux charpentes (8) sont reliées par au moins un élément d'entretoisement (15, 17, 18) afin de conserver une même distance entre elles.

9. Support de galet de roulement selon la revendication 8, caractérisé en ce que l'élément d'entretoisement (15) comporte en ses lieux d'assemblage avec les charpentes (8) des articulations d'assemblage (15a, 15b).

10. Support de galet de roulement selon la revendication 8, caractérisé en ce que d'une part un élément fixe d'appui (16) est disposé dans la région située entre les deux charpentes (8) - de préférence sensiblement sur le plan longitudinal vertical de symétrie (3a) du tube rotatif à supporter (3) - et d'autre part ces deux charpentes (8) sont reliées par deux éléments d'entretoisement (17, 18) de manière que chaque élément d'entretoisement soit relié à une extrémité par articulation à l'une des deux charpentes (8) et à l'autre extrémité opposée par articulation à l'élément fixe d'appui (16).
